# EUROPEAN PATENT APPLICATION

(11) **EP 1 349 087 A2**
(43) Date of publication of application: **01.10.2003**
(21) Application number: 03251569.4
(22) Date of filing: 14.03.2003
(51) Int. Cl.: G06F 17/30

(54) **Remote database access through a table entry**

(30) Priority: 29.03.2002 US 112468
(71) Applicant: NCR INTERNATIONAL INC., Dayton, Ohio 45479 (US)
(72) Inventor: Reed, Michael L., San Diego, CA 92120 (US); Frazier, John D., Ramona, CA 920065 (US)
(74) Representative: Williamson, Brian

(57) **Abstract**

Methods and apparatus for accessing remote data in a database system. in one implementation, a database system includes: one or more data storage facilities for use in storing data composing records in tables of a database, where at least one data storage facility stores a remote database access type object representing a remote database access type field for storing remote access information indicating remote data stored in a remote system, where the remote system is outside of the database system and is connected to the database system; one or more processing modules configured to manage the data stored in the data-storage facilities; and a database management component configured to access remote data stored in the remote system using remote access information stored in the remote database access type object corresponding to the remote data.

## Description

In a typical database system supporting SQL (Structured Query Language), table rows can include one or more fields that are user defined type (UDT) fields. One type of UDT is a UDT structured type. The UDT structured type shares many properties in common with the C-language "struct." Both a C-language struct and a UDT structured type can be declared to be composed of any number of data members which can be either homogeneous or heterogeneous with respect to their data types. Both a C-language struct and a UDT structured type can also be nested, containing data members which are themselves structured types. The declaration of a UDT structured type is entered into the DBS system using SQL Data Definition Directives.

A company often maintains many separate databases and/or data sources that are outside a central database system. Sometimes the company maintains these separate remote systems because of legacy applications tied to the systems. Typically, from time to time, data is imported from these remote systems into the central database to be used by clients of the central database. To access this remote data in the central database, the remote data is typically mirrored in the central database and so is stored and maintained in two or more locations.

The present disclosure provides methods and apparatus for accessing remote data in a database system. In one implementation, a database system includes: one or more data storage facilities for use in storing data composing records in tables of a database, where at least one data storage facility stores a remote database access type object representing a remote database access type field for storing remote access information indicating remote data stored in a remote system, where the remote system is outside of the database system and is connected to the database system; one or more processing modules configured to manage the data stored in the data-storage facilities; and a database management component configured to access remote data stored in the remote system using remote access information stored in the remote database access type object corresponding to the remote data.

In another implementation, a method of accessing remote data in a database system includes: receiving a database access request from a client system, where the database access request indicates a remote database access type field in an entry in a table in a database system; retrieving remote access information from the remote database access type field, where the remote access information indicates a remote system that is external to the database system and is connected to the database system by a network; and sending a remote access request to the remote system using the retrieved remote access information, where the remote access request indicates remote data to be accessed in the remote system.

An embodiment of the present invention will now be described, by way of example, with reference to the accompanying drawings in which:
FIG. 1 shows a sample architecture of a database management system (DBMS).
FIG. 2 is a representation of a remote database access type (RDBAT) object.
FIG. 3 is a flowchart of inserting remote access information into an RDBAT object.
FIG. 4 shows a local employee table and a remote address table before inserting a table entry including an RDBAT field.
FIG. 5 shows a local employee table and a remote address table after inserting a table entry including an RDBAT field.
FIG. 6 is a flowchart of retrieving remote data through an RDBAT field in a table entry.
FIG. 7 is a flowchart of updating remote data through an RDBAT field in a table entry.

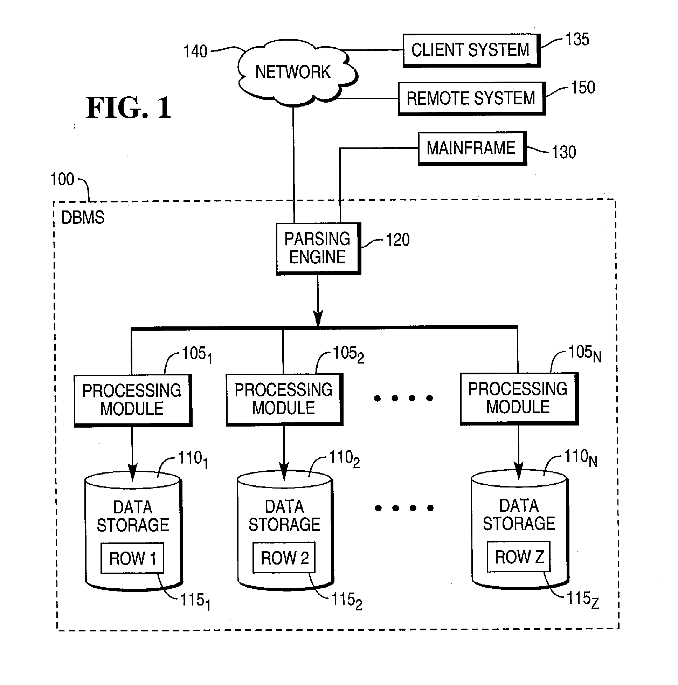

FIG. 1 shows a sample architecture of a database management system (DBMS) 100. In one implementation, DBMS 100 is a parallel architecture, such as a massively parallel processing (MPP) architecture. DBMS 100 includes one or more processing modules 105_{1...N} that manage the storage and retrieval of data in corresponding data-storage facilities 110_{1...N}. Each of processing modules 105_{1...N} manages a portion of a database that is stored in a corresponding one of data storage facilities 110_{1...N}. Each of data storage facilities 110_{1...N} includes one or more storage devices, such as disk drives.

As described below, DBMS 100 stores and retrieves data for records or rows in tables of the database stored in data storage facilities 110_{1...N}. Rows 115_{1...Z} of tables are stored across multiple data storage facilities 110_{1...N} to ensure that system workload is distributed evenly across processing modules 105_{1...N}. A parsing engine 120 organizes the storage of data and the distribution of rows 115_{1...Z} among processing modules 105_{1...N} and data storage facilities 110_{1...N}. In one implementation, parsing engine 120 forms a database management component for DBMS 100. Parsing engine 120 also coordinates the accessing and retrieval of data from data storage facilities 110_{1...N} in response to queries received from a user at a connected mainframe 130 or from a client computer 135 across a network 140. DBMS 100 usually receives queries in a standard format, such as the Structured Query Language (SQL) put forth by the American Standards Institute (ANSI). In one implementation, DBMS 100 is a Teradata Active Data Warehousing System available from NCR Corporation.

A remote system 150 is connected to DBMS 100 through network 140. Remote system 150 stores remote data that can be accessed through DBMS 100. In various implementations, remote system 150 is a database, spreadsheet, or some other OLE/DB source. In some implementations, more than one remote system 150 is connected to DBMS 100. As described below, DBMS 100 supports providing access through table entries to remote data stored in remote system 150. Accordingly, the remote data can be accessed through DBMS 100, such as at the request of client system 135 or a user at mainframe 130, without importing and maintaining copies of the remote data within DBMS 100 itself.

SQL provides various defined types of data and methods for accessing and manipulating data. SQL also supports user defined types (UDT) and user defined methods (UDM). In one implementation, DBMS 100 supports SQL and includes support for UDT's and UDM's.

DBMS 100 supports a structured UDT called a remote database access type (RDBAT). An RDBAT provides access to remote data stored in a remote system, such as remote system 150, outside of and connected to DBMS 100. A table entry or row stored in DBMS 100 includes a column or field of type RDBAT. The RDBAT field corresponds to remote data stored in remote system 150. The RDBAT field of the row does not include the data itself (or a reference to a locally stored object containing the data). Instead, the RDBAT field includes remote access information indicating how to access the remote data in remote system 150. The remote data is stored in multiple fields in a table in remote system 150. For example, the remote data corresponds to an address including a street field, a city field, and a zip code field. DBMS 100 treats the remote fields as members of a structured UDT represented by the RDBAT field. Accordingly, SQL references to the members of the structured UDT representing the remote fields are treated by DBMS 100 as indirect references to the remote fields. In an alternative implementation, an RDBAT type supports remote data that does not have multiple fields, such as a single integer, and so DBMS 100 treats SQL references to the RDBAT field directed at the remote data as references to the single remote field.

An RDBAT field is represented by an RDBAT object. The RDBAT object includes remote access information members providing the remote access information for accessing the remote data stored in remote system 150. The RDBAT object also includes one or more remote data members. The RDBAT object includes a remote data member for each field of remote data that is accessible through the RDBAT object. DBMS 100 does not mirror or maintain current copies of the remote data in the RDBAT object remote data members, but uses the remote data members as references to the remote fields and for temporary copies.

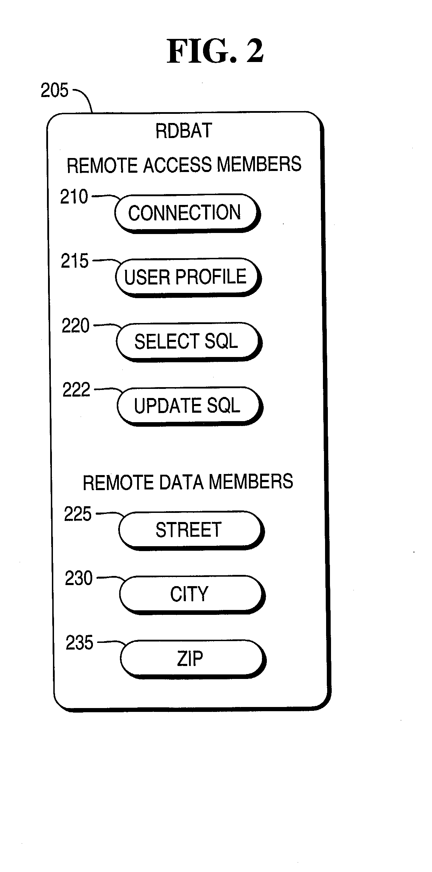

FIG. 2 is a representation of an RDBAT object 205. RDBAT object 205 includes four remote access information members providing remote access information:
Connection member 210, User Profile member 215, Select SQL member 220, and Update SQL member 222. Connection member 210 provides connection information to open a connection between DBMS 100 and remote system 150. For example, connection member 210 provides connection information to open an ODBC or OLE/DB connection. In one implementation, the connection information is defined in terms of a name that is further defined in the networking subsystem of the operating system of DBMS 100.

User profile member 215 provides user information to identify the source of the request to access the remote data to remote system 150, such as identifying a user at client system 135 or mainframe 130 for security. User Profile member 215 also includes password information. In an alternative implementation, RDBAT object 205 includes a separate password member for storing the password information. In another implementation, remote system 150 derives some or all of the user information from the session login information for the connection between DBMS 100 and remote system 150. In another implementation, DBMS 100 provides user information to remote system 150 derived from session login information for the connection between DBMS 100 and client system 135.

Select SQL member 220 provides an SQL query string to fetch a single distinct row of data from remote system 150. The query string can indicate a single remote entry (row) or an operation on multiple remote entries resulting in a single returned row of data. The operation on the multiple remote entries is performed on remote system 150. In an alternative implementation, Select SQL member 220 is replaced by a query member including a query string in a format corresponding to the query language used by remote system 150.

Update SQL member 222 includes a pattern string DBMS 100 uses to generate a remote update string, such as an update SQL statement. DBMS 100 replaces one or more elements of the pattern string using one or more fields and corresponding values received in an update request directed at the RDBAT field. One example of a pattern string for updating the remote field "street" is:
update remote_table set street = "street_value" where
(name = search_name);
"remote_table" indicates the remote table storing the remote data. "street" indicates the field to update and also a data member of the RDBAT object. "street_value" indicates a new value used to update the remote field. As described below, the new value is received in the update request for the RDBAT field and DBMS 100 stores a temporary copy of the new value in the corresponding data member of the RDBAT object (e.g., Street member 225). DBMS 100 uses the new value stored in the data member for the remote update string in place of "street_value". "name" and "search_name" indicate which entry in the remote table to update. The pattern string can include formatting information to facilitate substitutions. For this example pattern string, DBMS 100 generates a remote update string using the pattern string as a template and replacing "street_value" with the value stored in the Street member of the corresponding RDBAT object. To update other remote fields, the references to the remote field and data member value (i.e., "street" and "street_value") are changed. In one implementation, DBMS 100 generates a remote update string by substituting both the remote field name and the data member name according to the received update request. The pattern string indicates a single row to update. In an alternative implementation, the pattern string indicates multiple rows and the update is applied to each of the indicated rows. In another implementation, Update SQL member 222 is replaced by an update member including a pattern string in a format corresponding to the query language used by remote system 150.

RDBAT object 205 includes remote data members corresponding to the remote fields represented by RDBAT object 205. In one example, RDBAT object 205 corresponds to three fields in a remote table, Street, City, and Zip. Accordingly, RDBAT object 205 includes a Street member 225, a City member 230, and a Zip member 235. DBMS 100 treats references to the remote data members of the RDBAT structured type as indirect references to the remote fields. In an alternative implementation, the RDBAT object corresponds to a single remote field and so the RDBAT object includes a single remote data member or no remote data members.

The remote data members 225, 230, 235 are used to support queries directed at the RDBAT field but do not necessarily store current values for the remote data. The remote data is stored in remote system 150 and DBMS 100 retrieves or accesses the remote data in place in remote system 150 when the data is requested. Remote data members 225, 230, 235 store temporary copies of the remote data when the remote data has been retrieved to DBMS 100 or store temporary update data to update one or more remote fields, however, the temporary copies and temporary update data are not maintained by DBMS 100. In an alternative implementation, the remote data is not loaded into RDBAT object 205 or its remote data members 225, 230, 235.

The RDBAT UDT also includes one or more connection UDM's to support respective connection types. Each connection UDM is implemented to establish a connection between DBMS 100 and a remote system 150 according to the connection type of the UDM. In one implementation, a connection UDM for an ODBC connection has the following prototype:
SetRDBATodbc(varchar connection, varchar userid,
varchar password, varchar select_sql, varchar
update_sql)
The parameter "connection" indicates a connection to open, such as by providing a name that is further defined in the networking subsystem of the operating system of DBMS 100. The parameters "userid" and "password" indicate a user identifier and password, respectively, to provide access to the remote data in remote system 150. The parameter "select_sql" indicates an SQL query string to retrieve a single distinct row of data from remote system 150. The parameter "update_sql" indicates a pattern string to generate remote update string to update one or more fields of data in remote system 150. The data for these parameters is stored in the remote access information members of the RDBAT object (e.g., members Connection 210, User Profile 215, Select SQL 220, and Update SQL 222 shown in FIG. 2). DBMS 100 calls SetRDBATodbc in response to a request, such as from client system 135, to insert remote access information indicating an ODBC connection in an RDBAT field of a row in a table.

Using SQL, an RDBAT type is defined similarly to defining a structured type. An extended remote database access keyword "REMOTE" triggers DBMS 100 to create an RDBAT type. For example, the following statement creates an RDBAT type to support remote data corresponding to a structured type AddrType having members Street, City, and Zip:
CREATE TYPE REMOTE AddrType (Street varchar(20), City
varchar(20), Zip integer);
This statement defines an RDBAT type for an object as shown in FIG. 2. Parsing engine 120 builds the RDBAT type from the SQL statement. The resulting RDBAT type has seven members: four remote access information members (Connection, User Profile, Select SQL, Update SQL), and three remote data members (Street, City, Zip).

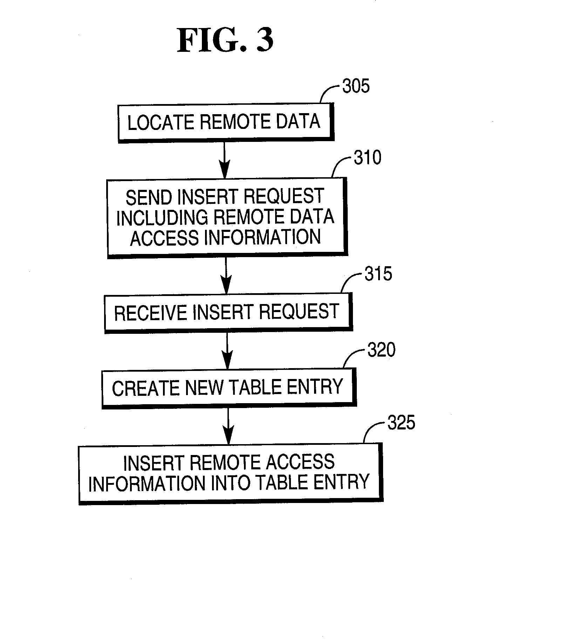

FIG. 3 is a flowchart of inserting remote access information into an RDBAT object. Client system 135 locates data to be made accessible as remote data through DBMS 100, block 305. Client system 135 collects the remote access information needed to access the remote data, such as connection information, user profile information, and SQL strings. Client system 135 sends an insert request to DBMS 100, including the collected remote access information, block 310. The insert request corresponds the remote access information to an RDBAT field in a new entry. DBMS 100 receives the insert request and parsing engine 120 parses the request, block 315. DBMS 100 creates a new table entry including an RDBAT field, block 320. DBMS 100 creates a new RDBAT object to represent the RDBAT field in the new table entry. DBMS 100 stores the remote access information in the new RDBAT object corresponding to the new table entry, block 325. DBMS 100 stores the remote access information in the remote access information members of the RDBAT object. DBMS 100 uses a connection UDM for the RDBAT field to set the remote access information for the new RDBAT object, such as by using the connection UDM SetRDBATodbc. Referring to RDBAT object 205 in FIG. 2, DBMS 100 stores connection information in Connection member 210, user profile information (e.g., a password) in User Profile member 215, an SQL query string in Select SQL member 220, and a pattern string in Update SQL member 222.

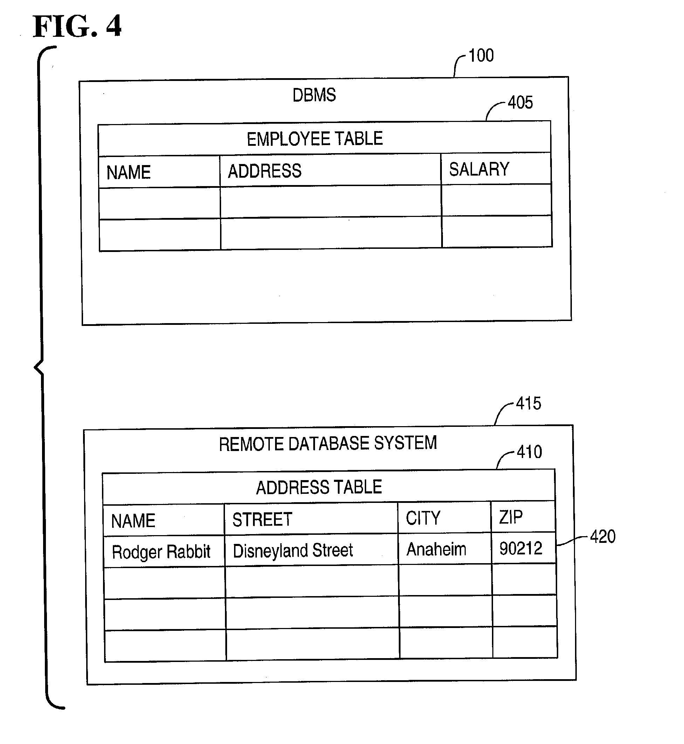

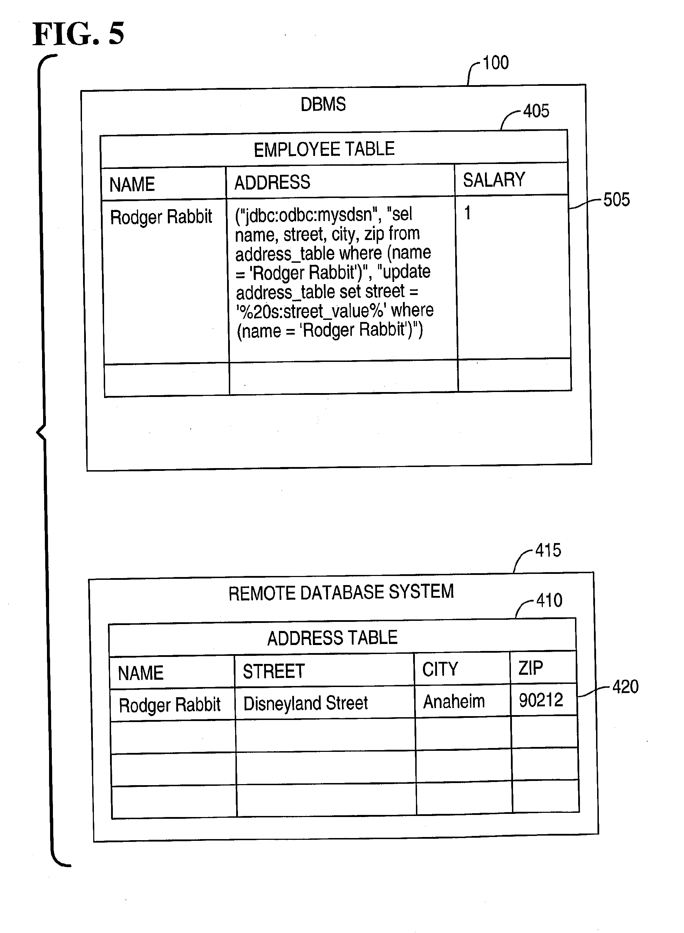

FIGS. 4 and 5 illustrate an example of inserting a table entry including an RDBAT field. In FIG. 4, a local employee table 405 is stored in DBMS 100 and a remote address table 410 is stored in a remote database system 415, such as remote system 150 in FIG. 1. Local employee table 405 has three columns: Name, Address, and Salary. Name is a string. Address is an RDBAT type, AddrType. As described above in an example of creating an RDBAT type, AddrType includes three data members: Street, City, and Zip. Members Street and City store strings and member Zip stores an integer. Salary is an integer. In FIG. 4, employee table 405 does not include any entries.

Remote address table 410 includes four columns: Name, Street, City, and Zip. Name, Street, and City are strings. Zip is an integer. Remote address table 410 has one entry 420. Entry 420 stores "Rodger Rabbit" for the Name column, "Disneyland Street" for Street, "Anaheim" for City, and 90212 for Zip. The members of the RDBAT type match the fields of remote address table 410.

To access the remote data stored in entry 420 of remote address table 410 through DBMS 100, DBMS 100 stores remote access information in the RDBAT field of an entry in local employee table 405. To store the remote access information, mainframe 130 or client system 135 sends an insert request to DBMS 100, as described above referring to FIG. 3. The following statement is an example of a request to DBMS 100 to store remote access information for entry 420 of remote address table 410 (address_table) in a new entry of local employee table 405 (EMPLOYEE_TABLE):
INSERT INTO EMPLOYEE_TABLE VALUES ("Rodger Rabbit", new
AddrType().SetRDBATodbc("jdbc:odbc:mysdsn", 1, 1, "sel
name, street, city, zip from address_table where (name =
'Rodger Rabbit')", "update address_table set street =
' %20s:street_value%' where (name = 'Rodger Rabbit')"),
1);
For the purpose of this example, a dummy value of 1 is used for the parameters userid, password, and salary.

FIG. 5 shows local employee table 405 and remote address table 410 after the insert request. DBMS 100 creates a new entry 505 in local employee table 405. The Address column of entry 505 is represented by a new RDBAT object. Entry 505 stores "Rodger Rabbit" for the Name column, remote access information for the Address column, and 1 for the Salary column. The remote access information for entry 505 includes connection information ("jdbc:odbc:mysdsn") stored in the Connection member of the RDBAT object (recall Connection member 210 of RBDAT object 205 in FIG. 2). userid and password information for accessing remote address table 410 is stored in the User Profile member. In one implementation, entry 505 does not include user profile information because remote database system 415 does not require user profile information to allow DBMS 100 access to data. In another implementation, the user profile information required by remote database system 415 is derived from session login information. The Select SQL information and Update SQL information are appropriate for remote database system 410 and are stored in the Select SQL and Update SQL members, respectively. The Select SQL information requests the data for each of the fields in an entry of remote address table 410: "sel name, street, city, zip from address_table where (name = 'Rodger Rabbit')". The Update SQL information is a pattern string to set the street field in remote address table 410: "update address_table set street = '%20s:street_value%' where (name = 'Rodger Rabbit')". The example pattern string includes formatting information.

Accordingly, entry 505 of local employee table 405 does not store the remote data for the Address (i.e., the Street, City, and Zip data), but instead stores remote access information. The remote data remains in remote database system 415. Client system 135 or DBMS 100 can access the remote data by directing requests at entry 505, as though the remote data were stored in entry 505. However, these requests are translated internally, such as by parsing engine 120 in combination with the processing module 105 connected to the data storage facility 110 storing the table entry, into a request for remote database system 415 using the remote access information.

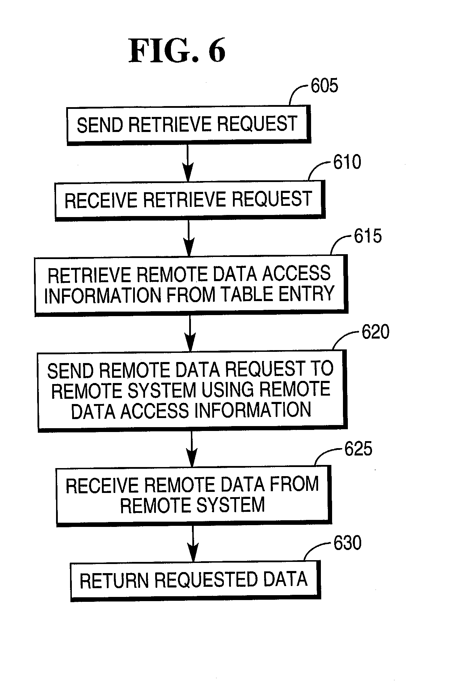

FIG. 6 is a flowchart of retrieving remote data through an RDBAT field in a table entry. Mainframe 130 or client system 135 sends a retrieve request to DBMS 100 requesting data corresponding to an RDBAT field in a table entry, block 605. The retrieve request is a standard retrieve request, such as an SEL statement. The retrieve request indicates one or more remote data members of the RDBAT field corresponding to respective remote fields. The retrieve request sent does not need to indicate that the data sought is remote data. DBMS 100 receives the retrieve request and parsing engine 120 parses the request, block 610. DBMS 100 accesses the entry indicated by the request and retrieves the remote access information stored in the RDBAT field of the entry, block 615. When parsing engine 120 accesses the table entry, the corresponding processing module 105 informs parsing engine 120 that the field is an RDBAT field. The processing module 105 retrieves the remote access information and creates a remote data request to be sent to remote system 150. As described above, the remote data request includes the query string stored in the Select SQL member of the RDBAT object (recall Select SQL member 220 in FIG. 2).

DBMS 100 sends the remote data request to remote system 150 using the retrieved remote access information, block 620. As described above, the remote access information includes Connection information, User Profile information, and Select SQL information. DBMS 100 uses the Connection information to establish a connection to remote system 150. DBMS 100 uses the User Profile information to gain access to remote system 150 and the remote data. As described above, User Profile information is not needed in some implementations or can be derived from session login information. DBMS 100 provides the Select SQL information to remote system 150 as a select query string.

DBMS 100 receives the requested remote data from remote system 150, block 625. Remote system 150 provides the data for the row and fields indicated by the select query string supplied by DBMS 100. As described above, the select query string can indicate an operation on multiple rows in remote system 150, and the result of the operation is returned as a single row. If the select query string does not return exactly one row, remote system 150 returns a null or error value to DBMS 100. DBMS 100 stores the returned fields of data as temporary copies in the corresponding remote data members of the RDBAT object. If the returned row of data includes more fields than the number of remote data members in the RDBAT object, the extra fields are ignored, or, alternatively, an error is reported. DBMS 100 derives the requested data from the received remote data and returns the requested data to client system 135, block 630. In one implementation, the received remote data includes data for the entire row from remote system 150. When client system 135 has requested less data than the entire row, such as data for a single field within the row from remote system 150, DBMS 100 selects the requested data from the received remote data and returns the requested data to client system 135.

In an example of retrieving remote data, referring to the tables shown in FIG. 5, client system 135 requests data from entry 505 in local employee table 405 (EMPLOYEE_TABLE) using the following statement:
SEL AddrType.Street FROM EMPLOYEE_TABLE;
AddrType.Street requests the Street member of an AddrType field. However, entry 505 is an RDBAT field so DBMS 100 passes a remote data request to remote database system 415 using the remote access information stored in entry 505. Remote database system 415 returns the remote data indicated by the query string in the remote data request. As shown in FIG. 5, the select query string indicates the name, street, city, and zip data from the entry matching (name = 'Rodger Rabbit'). Accordingly, remote database system 415 returns a row including "Rodger Rabbit", "Disneyland Street", "Anaheim", 90212. "Disneyland Street" corresponds to the Street member of AddrType so DBMS 100 returns "Disneyland Street" to client system 135.

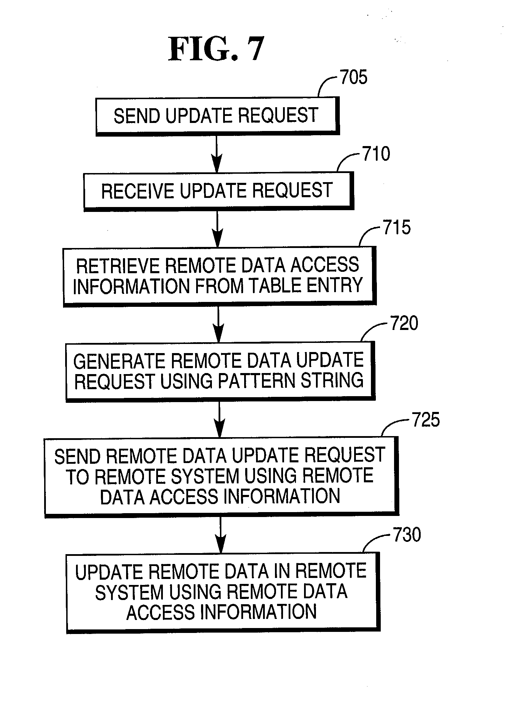

FIG. 7 is a flowchart of updating remote data through an RDBAT field in a table entry. Mainframe 130 or client system 135 sends an update request to DBMS 100 requesting to change data corresponding to an RDBAT field in a table entry, block 705. The update request is a standard update request including one or more requested modifications, such as an UPDATE statement. The update request sent does not need to indicate that the data to be changed is remote data. The update request indicates one or more modifications to be made to the remote data, such as one or more new values for corresponding remote fields. DBMS 100 receives the update request and parsing engine 120 parses the request, block 710. DBMS 100 accesses the entry indicated by the request and retrieves the remote access information stored in the RDBAT field of the entry, block 715. When parsing engine 120 accesses the table entry, the corresponding processing module 105 informs parsing engine 120 that the field is an RDBAT field.

The processing module 105 retrieves the remote access information and generates a remote data update request to be sent to remote system 150, block 720. The remote data update request includes the new value(s) or modification(s) supplied in the update request from client system 135. As described above, the processing module 105 stores the new value(s) from the update request sent by client system 135 in the corresponding remote data member(s) of the RDBAT object as temporary update data. The processing module 105 generates a remote update string for the remote data update request using the pattern string stored in the Update SQL member of the RDBAT object (recall Update SQL member 222 in FIG. 2). The processing module 105 uses the pattern string as a template and replaces any appropriate values and fields in the pattern string using data stored in the corresponding remote data members of the RDBAT object.

DBMS 100 sends the remote data update request to remote system 150 using the retrieved remote access information, block 725. As described above, the remote access information includes Connection information, SQL information, and User Profile information. DBMS 100 uses the Connection information to establish a connection to remote system 150. DBMS 100 provides the remote update string to remote system 150. DBMS 100 uses the User Profile information to gain access to remote system 150 and the remote data. As described above, User Profile information is not needed in some implementations or can be derived from session login information.

Remote system 150 updates data stored in the indicated entry according to the query string in the remote data update request, block 730. Remote system 150 accesses the row indicated by the remote update string supplied by DBMS 100. If the query string does not indicate exactly one row, remote system 150 returns a null or error value to DBMS 100. Remote system 150 updates the remote data according to the received new value(s) or modification(s) in the remote data update request. In an implementation where the pattern string indicates multiple rows, the update is applied to each of the indicated rows. In one implementation, remote system 150 returns the updated data for the indicated row, as described above for retrieving remote data.

In an example of updating remote data, referring to the tables shown in FIG. 5, client system 135 requests to update data in entry 505 in local employee table 405 (EMPLOYEE_TABLE) using the following statement:
UPDATE EMPLOYEE_TABLE SET AddrType.Street = 'Disneyland
Ave' WHERE name = 'Rodger Rabbit';
AddrType.Street indicates the Street member of an AddrType field. However, entry 505 is an RDBAT field. DBMS 100 stores the new value from the original update request (i.e., "Disneyland Ave") in the Street member of the RDBAT object (recall Street member 225 in FIG. 2). DBMS 100 generates a remote update string from the pattern string. Recalling the example pattern string described above:
update address_table set street = '%20s:street_value%'
where (name = 'Rodger Rabbit')
DBMS 100 generates this remote update string:
update address_table set street = 'Disneyland Ave' where
(name = 'Rodger Rabbit')
DBMS 100 uses the pattern string as a template, substituting the value from the Street member (i.e., "Disneyland Ave") for the "street_value" in the pattern string, according to the supplied formatting information.

DBMS 100 passes a remote data update request to remote database system 415 using the remote access information stored in entry 505. The remote data update request includes the generated remote update string. Remote database system 415 updates the Street field in entry 420. Accordingly, the remote Street field changes from "Disneyland Street" to "Disneyland Ave".

In an alternative implementation, connections established to access remote data are maintained to be reused for accessing data in multiple rows. In this case, the connection information and user profile information does not change but the query information can change with each access. In addition, the RDBAT type can be implemented to include error and exception handling methods to accommodate failures in the connection to a remote system or errors in accessing the remote data (e.g., when a supplied query string does not return only one row in a remote table).

The various implementations of the invention are realized in electronic hardware, computer software, or combinations of these technologies. Most implementations include one or more computer programs executed by a programmable computer. For example, referring to FIG. 1, in one implementation, DBMS 100 includes one or more programmable computers implementing processing modules 105_{1...N}, data storage facilities 110_{1...N}, and parsing engine 120. In general, each computer includes one or more processors, one or more data-storage components (e.g., volatile or non-volatile memory modules and persistent optical and magnetic storage devices, such as hard and floppy disk drives, CD-ROM drives, and magnetic tape drives), one or more input devices (e.g., mice and keyboards), and one or more output devices (e.g., display consoles and printers).

The computer programs include executable code that is usually stored in a persistent storage medium and then copied into memory at run-time. The processor executes the code by retrieving program instructions from memory in a prescribed order. When executing the program code, the computer receives data from the input and/or storage devices, performs operations on the data, and then delivers the resulting data to the output and/or storage devices.

Various illustrative implementations of the present invention have been described. However, one of ordinary skill in the art will see that additional implementations are also possible and within the scope of the present invention. For example, while the above description focuses on implementations based on a DBMS using a massively parallel processing (MPP) architecture, other types of database systems, including those that use a symmetric multiprocessing (SMP) architecture, are also useful in carrying out the invention. Accordingly, the present invention is not limited to only those implementations described above.

## Claims

1. A method of accessing remote data in a database system, comprising:
receiving a database access request from a client system, where the database access request indicates a remote database access type field in an entry in a table in a database system;
retrieving remote access information from the remote database access type field, where the remote access information indicates a remote system that is external to the database system and is connected to the database system by a network; and
sending a remote access request to the remote system using the retrieved remote access information, where the remote access request indicates remote data to be accessed in the remote system.

2. A method as claimed in claim 1, where the database access request is a request to retrieve requested data, the remote access request is a request to retrieve the remote data from the remote system, and the method further comprises:
receiving the remote data from the remote system;
deriving the requested data from the remote data to meet the database access request; and
sending the derived requested data to the client system.

3. A method as claimed in claim 1, where the database access request is a request to update data according to one or more modifications, the remote access request is a request to update the remote data in the remote system and includes the one or more modifications from the database access request.

4. A method as claimed in claim 3, where the database access request includes a new value, the remote database access type field includes a pattern string, and the remote access request includes a remote update string, and the method further comprises generating the remote update string using the pattern string and the new value.

5. A method as claimed in claim 1, where the remote database access type field is represented by a remote database access type object.

6. A method as claimed in claim 5, where the remote database access type object includes one or more remote access information members for storing the remote access information for the remote database access type field.

7. A method as claimed in claim 6, where the remote database access type object includes a connection member for storing connection information, a query member for storing a query string, and a user profile member for storing user profile information.

8. A method of storing remote access information in a database system, comprising:
receiving an insert request from a client system, where the insert request includes remote access information indicating remote data stored in a remote system connected to a database system, where the remote access information includes a query string indicating the remote data;
creating a new entry in a table in the database system, where the new entry includes a remote database access type field; and
storing the remote access information in the remote database access type field.

9. A method as claimed in claim 8, where the remote database access type field is represented by a remote database access type object.

10. A method as claimed in claim 9, where the remote database access type object includes one or more remote access information members for storing the remote access information for the remote database access type field.

11. A method as claimed in claim 8, where the remote database access type object includes one or more connection methods for storing the respective types of remote access information in the remote database access type object.

12. A method of storing remote access information in a database system, comprising:
obtaining remote access information for remote data stored in a remote system connected to a database system, where the remote access information includes a query string indicating the remote data; and
sending an insert request to the database system, where the insert request includes the obtained remote access information indicating the remote data.

13. A computer program, stored on a tangible storage medium, for use in accessing remote data in a database system, the program comprising executable instructions that cause a computer to:
receive a database access request from a client system, where the database access request indicates a remote database access type field in an entry in a table in a database system;
retrieve remote access information from the remote database access type field, where the remote access information indicates a remote system that is external to the database system and is connected to the database system by a network; and
send a remote access request to the remote system using the retrieved remote access information, where the remote access request indicates remote data to be accessed in the remote system.

14. A computer program as claimed in claim 13, where the database access request is a request to retrieve requested data, the remote access request is a request to retrieve the remote data from the remote system, and the computer program further comprises executable instructions that cause a computer to:
receive the remote data from the remote system;
derive the requested data from the remote data to meet the database access request; and
send the derived requested data to the client system.

15. A computer program as claimed in claim 13, where the database access request is a request to update data according to one or more modifications, the remote access request is a request to update the remote data in the remote system and includes the one or more modifications from the database access request.

16. A computer program as claimed in claim 15, where the database access request includes a new value, the remote database access type field includes a pattern string, and the remote access request includes a remote update string, and the computer program further comprises executable instructions that cause a computer to generate the remote update string using the pattern string and the new value.

17. A computer program as claimed in claim 13, where the remote database access type field is represented by a remote database access type object.

18. A database system, comprising:
one or more data storage facilities for use in storing data composing records in tables of a database, where at least one data storage facility stores a remote database access type object representing a remote database access type field for storing remote access information indicating remote data stored in a remote system, where the remote system is outside of the database system and is connected to the database system;
one or more processing modules configured to manage the data stored in the data-storage facilities; and
a database management component configured to access remote data stored in the remote system using remote access information stored in the remote database access type object corresponding to the remote data.

19. A database system as claimed in claim 18, where one or more of the processing modules are configured to access the remote data in conjunction with the database management component.

20. A database system as claimed in claim18, where the database management component is further configured to retrieve remote data from the remote system using the remote access information.

21. A database system as claimed in claim 18, where the database management component is further configured to update remote data stored in the remote system using the remote access information.
